(19) Europäisches Patentamt

European Patent Office

Office européen des brevets

(11) Numéro de publication: **0 232 754 B1**

# (12) FASCICULE DE BREVET EUROPEEN

(45) Date de publication de fascicule du brevet: **22.07.92**   (51) Int. Cl.⁵: **G02B 6/38**

(21) Numéro de dépôt: **87100703.5**

(22) Date de dépôt: **20.01.87**

(54) **Connecteur pour fibres optiques.**

(30) Priorité: **23.01.86 FR 8600956**

(43) Date de publication de la demande:
**19.08.87 Bulletin 87/34**

(45) Mention de la délivrance du brevet:
**22.07.92 Bulletin 92/30**

(84) Etats contractants désignés:
**DE ES FR GB IT**

(56) Documents cités:
**EP-A- 0 090 724**
**DE-A- 2 516 858**
**GB-A- 2 007 867**
**US-A- 4 395 089**

**PATENT ABSTRACTS OF JAPAN, vol. 7, no. 73 (P-186)[1218], 25 mars 1983; & JP-A-58 4111**

(73) Titulaire: **ENTRELEC SA**
**184-186 rue Léon Blum**
**F-69100 Villeurbanne(FR)**

(72) Inventeur: **Heng, Jean-Paul**
**18, rue des Tourelles**
**F-69005 Lyon(FR)**
Inventeur: **Humbert-Labeaumaz, Alain**
**"La Petite Roseraie" 7, Chemin Guillermin**
**F-69500 Bron(FR)**
Inventeur: **Jusseau, Marcel**
**84, rue Racine**
**F-69100 Villeurbanne(FR)**

(74) Mandataire: **Weinmiller, Jürgen et al**
**Lennéstrasse 9 Postfach 24**
**W-8133 Feldafing(DE)**

## Description

La présente invention a pour objet un connecteur pour fibres optiques.

Le développement des systèmes mettant en oeuvre des moyens filaires de transmission par voie optique associés ou substitués aux moyens filaires de transmission par voie électrique, conduit à réaliser des connecteurs pour libres optiques inspirés de ceux prévus pour les fils électriques.

Le document GB-A-2007867 décrit un connecteur pour fibres optiques dans lequel les fibres sont raccordées bout à bout au moyen de pièces complémentaires. L'immobilisation d'une fibre y est réalisée par coincement de celle-ci entre des prolongements d'allure semi-tubulaire d'une pièce qui sont ceinturés par une douille les comprimant contre la fibre lorsqu'elle est elle-même vissée sur la pièce.

Par une démarche parallèle à celle qui existe dans le domaine de la connexion électrique, les constructeurs de connecteurs pour fibres optiques cherchent à réaliser des dispositifs de raccordement plus simples et moins coûteux que ceux réalisés jusqu'à présent, tout en améliorant leur fiabilité et leur facilité d'exploitation.

La simplicité est recherchée notamment au niveau de la fabrication des pièces constitutives et de leur assemblage, ainsi qu'au niveau de la mise en oeuvre par l'utilisateur.

A cet effet la présente invention propose un connecteur pour fibres optiques et plus particulièrement un connecteur de type bloc de jonction.

Le connecteur proposé a un corps composé de deux parties complémentaires qui comportent chacune au moins un prolongement semi-tubulaire formant un tube fendu avec le prolongement semi-tubulaire correspondant de l'autre partie complémentaire auquel il s'accole; ce tube fendu porte extérieurement une bague de coincement qui le ceinture pour assurer, suivant sa position sur la longueur du tube fendu, le coincement par ces prolongements d'au moins une fibre optique introduite dans le tube fendu.

Selon une caractéristique de l'invention, un tube fendu comporte des prolongements qui s'épaississent progressivement vers l'une des deux extrémités du tube pour permettre un coincement de fibre par rapprochement mutuel des prolongements du tube par la bague coulissée dans le direction d'épaississement. De plus au moins un des prolongements d'un tube fendu et la bague de coincement, qui ceinture ce tube, comportent respectivement et complémentairement, pour le verrouillage en position de cette bague sur ce tube fendu et corollairement d'une fibre optique dans ledit tube, l'un au moins un bourrelet longitudinal, l'autre au moins une cannelure longitudinale où coulisse ce bourrelet, lors d'une translation de la bague sur le tube fendu et d'où s'échappe ledit bourrelet, lors d'une rotation de la bague autour du tube à l'occasion de laquelle ce bourrelet se presse à l'intérieur de la bague qu'il immobilise par rapport au tube, en conséquence.

Selon une autre caractéristique de l'invention, le connecteur comporte au moins deux tubes fendus qui sont alignés et qui sont composés chacun de deux prolongements semi-tubulaires s'ouvrant de part et d'autre d'une portion centrale composée par accolement de deux zones centrales des parties complémentaires, chaque tube portant une bague de coincement de manière à permettre le raccordement en bout, en portion centrale, d'au moins deux fibres introduites chacune par une extrémité d'un des tubes alignés.

L'invention, ses caractéristiques et ses avantages sont précisés dans la description qui suit, en liaison avec les figures répertoriées ci-dessous.

La figure 1 présente, en vue de dessus, un connecteur selon l'invention associé à deux fibres optiques.

La figure 2 présente une coupe longitudinale médiane effectuée selon le plan de la feuille sur le connecteur de la figure 1.

Les figures 3 et 4 présentent chacune une coupe transversale selon III-III et IV-IV du connecteur des figures 1 et 2.

La figure 5 présente une vue de la pièce moulée incluant les parties complémentaires accolables destinées à fournir le corps d'un connecteur selon l'invention, à laquelle on a ajouté artificiellement la pièce d'obturation.

Les figures 6 et 7 présentent chacune une coupe transversale respectivement selon VI-VI et selon VII-VII de l'ensemble présenté figure 4.

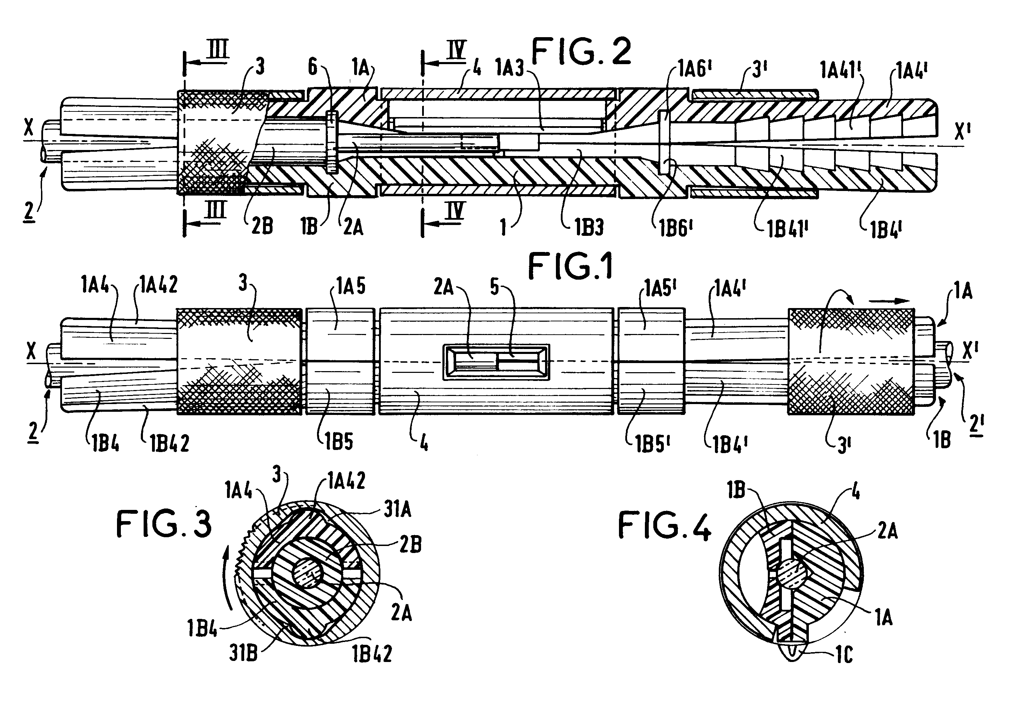

Le connecteur pour fibres optiques présenté figure 1 comporte un corps 1, qui est par exemple moulé dans un matériau plastique rigide, notamment de type P.B.T.P, et qui comporte au moins un conduit de raccordement par les extrémités duquel sont séparément introduites deux fibres optiques 2, 2' à raccorder en bout.

Chaque fibre optique comporte classiquement une âme entourée d'une gaine, cette âme et cette gaine étant respectivement référencées 2A et 2B pour la fibre 2 sur la figure 2.

Deux bagues 3, 3', préférablement identiques, permettent d'immobiliser les fibres 2 et 2' dans le corps 1 du connecteur d'une manière qui sera précisée plus loin.

Une pièce d'obturation 4 vient se placer centralement sur le corps 1 afin d'assurer suivant son positionnement, soit le dégagement, soit l'obturation d'une fenêtre 5 d'accès à la zone où se rencontrent bout à bout les âmes des fibres à raccorder, dans la portion centrale d'au moins un conduit de raccordement.

Bien entendu il est possible de prévoir un conduit de raccordement permettant d'aligner une fibre optique avec un émetteur et/ou récepteur optique placé dans le corps 1, une seule bague 3 peut alors être nécessaire.

Le corps 1 est ici composé de deux parties complémentaires 1A, 1B accolées l'une à l'autre de manière précise et prédéterminée. Les deux parties 1A et 1B sont complémentairement évidées de manière à délimiter au moins un conduit de raccordement de fibre, lorsqu'elles sont accolées.

Dans la réalisation présentée, les deux parties complémentaires 1A, 1B forment chacune une demi-coque de forme demi-cylindrique allongée et constituent ensemble un corps de connecteur d'allure cylindrique dont l'axe longitudinal XX' correspond à celui d'un conduit rectiligne de raccordement, ménagé centralement, lorsqu'elles sont accolées.

A titre de variante, des connecteurs à plusieurs conduits de raccordement peuvent être obtenus en rainurant parallèlement et de manière complémentaire les faces en regard des parties complémentaires 1A, 1B accolées. Les deux parties complémentaires peuvent ainsi comporter plusieurs rainures de conduit de raccordement sur les faces en regard d'une même demi-coque ou de plusieurs demi-coques côte à côte.

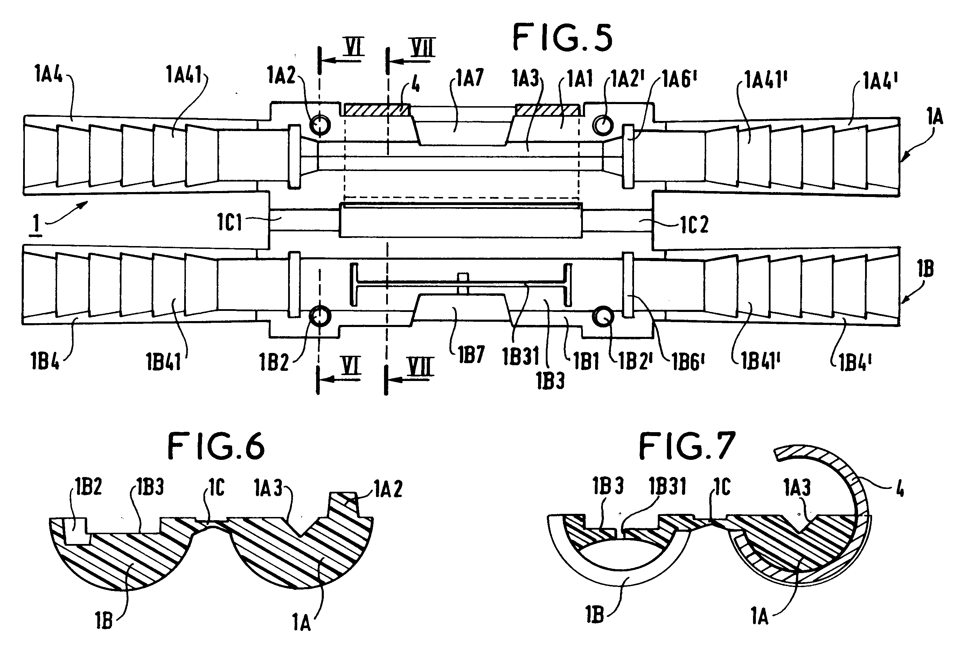

Dans la réalisation présentée figure 5, chaque partie 1A ou 1B comporte une zone centrale 1A1 ou 1B1 destinée à venir se plaquer contre la zone centrale correspondante 1B1 ou 1A1 de l'autre partie en une position précise que fixent des organes de positionnement réciproques répartis sur les faces en regard des deux parties complémentaires, tels ici des tétons 1A2, 1A2' et leurs logements 1B2, 1B2' répartis sur les zones centrales 1A1, 1B1.

La portion centrale du ou des conduits de raccordement est constituée à l'aide d'évidemments complémentaires réalisés sous forme de rainures rectilignes qui s'étendent au travers des zones centrales, telles les rainures complémentaires 1A3, 1B3 ménagées au travers des zones centrales 1A1 et 1B1.

Le ou les conduits de raccordement se prolongent, de part et d'autre des zones centrales accolées, à l'intérieur de prolongements semi-tubulaires réalisés sur les parties complémentaires 1A, 1B de manière à former des tubes fendus, lorsque ces pièces complémentaires sont accolées, tels les deux tubes fendus 1A4-1B4 et 1A4'-1B4' respectivement composés de deux prolongements semi-tubulaires 1A4 et 1B4 pour l'un 1A4' et 1B4' pour l'autre.

L'intérieur des tubes fendus est agencé pour permettre l'insertion d'une fibre jusqu'au niveau de la portion centrale du conduit de raccordement dont ils font partie, cette portion centrale ne permettant que le passage de l'âme de la fibre préalablement denudée.

Dans la réalisation présentée, chaque tube fendu est intérieurement cranté de manière à permettre une introduction aisée de la fibre et à tendre à s'opposer à son retrait.

Ceci est obtenu ici par la réalisation d'une succession de crans tronconiques centrés sur l'axe du conduit de raccordement et ménagés partiellement et complémentairement dans les prolongements semi-tubulaires qui composent chaque tube fendu, lorsque les parties complémentaires 1A, 1B sont accolées, tel le cran 1A41'-1B41' ménagé en partie dans le prolongement semi-tubulaire 1A4' et en partie dans le prolongement complémentaire 1B4'.

De plus dans la réalisation présentée, chaque tube fendu s'évase en s'épaississant légèrement vers son extrémité libre à travers laquelle peut être introduite une fibre.

Comme indiqué plus haut, le maintien d'une fibre dans un tube fendu est obtenu par action d'une bague de coincement venant se placer autour du tube.

Chaque tube fendu comporte extérieurement au moins un bourrelet longitudinal destiné à coopérer avec une cannelure complémentaire de la bague de coincement que l'on vient placer sur ce tube. Dans la réalisation présentée, chaque bague de coincement comporte deux cannelures internes diamétralement opposées, telles les cannelures 31A, 31B de la bague de coincement 3 sur la figure 3 ; chaque tube fendu comporte aussi deux bourrelets longitudinaux diamétralement opposés qui sont réalisés chacun à l'extérieur d'un des deux prolongements semi-tubulaires du tube, tels les bourrelets longitudinaux 1A42 et 1B42 sur les prolongements semi-tubulaires 1A4 et 1B4.

Chaque bague de coincement est guidée en translation par ses cannelures le long du tube fendu sur lequel elle est placée et sa rotation rapproche les deux prolongements semi-tubulaires, formant un tube fendu, sous la pression de ses cannelures sur les bourrelets desdits prolongements.

Bien entendu, il est envisageable de rainurer extérieurement les prolongements et de doter les bagues de coincement de renflements complémentaires de ces rainures.

L'insertion d'une fibre dans un tube fendu est facilitée par l'évasement de ce tube vers son extrémité libre, notamment lorsque la bague de coincement qu'il porte est positionnée vers le centre du connecteur contre une butée en surépaisseur, ici de forme circulaire, qui termine chaque tube fendu, telle 1A5-1B5 ou 1A5'-1B5'. Chacune de ces bu-

tées est constituée par deux demi-butées cylindriques accolées qui sont ménagées chacune sur l'une des deux parties complémentaires, telles les demi-butées 1A5 et 1B5.

Deux joints toriques, tel 6 figure 2, viennent se placer dans deux rainures circulaires situées chacune entre la portion centrale d'un conduit de raccordement et l'un des deux tubes fendus qui le prolonge. Chaque joint torique est monté sur l'âme dénudée d'une fibre à l'endroit où se termine la gaine, la rainure circulaire, telle 1A6'-1B6', où il se loge est complémentairement réalisée par association de deux rainures en demi-cercle, telles 1A6' et 1B6', respectivement ménagées chacune dans une des parties complémentaires 1A ou 1B.

La fenêtre d'accès 5 est constituée par deux évidemments transversaux complémentaires 1A7, 1B7 (figure 5) ménagés respectivement en regard, chacun dans la zone centrale d'une des parties complémentaires, et débouchant d'une part extérieurement, d'autre part intérieurement en portion centrale de conduit de raccordement, c'est-à-dire au milieu des rainures rectilignes 1A3, 1B3 dans la zone prévue pour la rencontre des âmes des deux fibres à raccorder en bout.

La fenêtre d'accès 5 peut être dégagée ou obturée à volonté par l'intermédiaire de la pièce d'obturation 4 qui vient s'agrafer autour de la partie centrale du connecteur fournie par les parties complémentaires 1A, 1B accolées. Cette pièce d'obturation 4 est ici constituée par un large anneau relativement élastique, par exemple en métal, qui est fendu longitudinalement (figures 1 et 4) de manière à pouvoir venir enfourcher les parties complémentaires accolées, dans la zone où débouche la fenêtre d'accès 5, l'une des parties complémentaires, soit ici 1B, étant amincie à ce niveau pour permettre cette mise en place.

Dans la réalisation choisie, la pièce d'obturation 4 est immobilisée en translation entre les butées 1A5-1B5 et 1A5'-1B5' comme le montre la figure 1. Par contre cette pièce d'obturation 4 est susceptible de tourner entre ces butées et autour des pièces complémentaires accolées de telle sorte que la fenêtre d'accès 5 soit dégagée lorsque la fente longitudinale de l'anneau que forme la pièce d'obturation est au niveau de cette fenêtre, et qu'elle soit obturée en tout autre position.

Dans une forme préférée de réalisation proposée figure 5, le corps 1 du connecteur est composé de deux parties complémentaires 1A et 1B formant une seule pièce, ces deux parties complémentaires étant par exemple moulées côte à côte avec au moins une et ici deux liaisons latérales (1C1, 1C2) souples permettant par pliage la mise en position accolée.

Les zones centrales 1A1, 1B1 des parties complémentaires 1A, 1B qui sont planes sont dotées de rainures rectilignes complémentaires 1A3, 1B3 de même longueur mais de formes différentes de manière à assurer un positionnement précis et sans écrasement des âmes des fibres à raccorder.

La rainure rectiligne 1A3 est dotée d'une section en V (figures 6 et 7) et est ménagée dans une partie épaisse de la partie complémentaire 1A qui la comporte de manière à présenter une bonne rigidité.

La rainure rectiligne 1B3 est dotée d'un fond plat longitudinalement fendu pour présenter une légère flexibilité.

Les lèvres de la fente longitudinale 1B31 en fond de rainure rectiligne 1B3, viennent prendre appui longitudinalement sur l'âme de chaque fibre et poussent ces âmes contre les parois en V de la rainure rectiligne 1A3 assurant ainsi son centrage (figure 4).

Dans la forme de réalisation présentée, l'épaisseur des parois bordant les lèvres de la fente longitudinale 1B31 se réduit progressivement vers la fente ainsi qu'on le voit sur les figures 4 et 7, ce qui permet d'une part d'obtenir la flexibilité recherchée d'autre part de réduire l'épaisseur de la pièce 1B au niveau où l'on vient placer la pièce d'obturation ce qui permet d'enfourcher cette pièce d'obturation par sa fente sur les deux pièces complémentaires 1A, 1B accolées.

Le connecteur selon l'invention est simplement assemblé par montage successif des bagues de coincement 3, 3' et de la pièce d'obturation 4, après pliage de la pièce moulée au niveau de la ou des liaisons souples 1C de manière à accoler les deux pièces complémentaires 1A, 1B qu'elle comporte pour que leurs zones centrales 1A1, 1B1 soient plaquées l'une contre l'autre dans la position que fixe leurs organes de positionnement réciproques 1A2, 1B2 et 1A2', 1B2'. Dans la réalisation choisie les organes de positionnement réciproques, les bagues de coincement 3, 3' et la pièce d'obturation 4 participent au maintien en position des parties complémentaires 1A, 1B accolées.

Le raccordement de deux fibres 2, 2' s'effectue par introduction successive des fibres, chacune dans un tube fendu 1A4-1B4 ou 1A4'-1B4' et des âmes de ces fibres dans la portion de conduit du raccordement formé par les rainures 1A3 et 1B3, après dénudage de ces âmes sur une longueur leur permettant de se rencontrer bout à bout sous la fenêtre d'accès 5 qui permet de vérifier la réalité de la mise bout à bout et éventuellement d'effectuer un assujettissement des âmes en bout par collage.

L'introduction des fibres 2, 2' dans les tubes fendus est facilitée par le positionnement respectif des bagues de coincement 3, 3' contre les butées 1A5-1B5 et 1A5'-1B5' qui permet un évasement maximal des prolongements semi-tubulaires formant ces tubes fendus.

L'assujettissement des fibres au connecteur est assuré pour chacune d'elle par translation de la bague de coincement 3 ou 3′ vers l'extrémité libre du tube fendu qui la loge et par rotation de cette bague de coincement.

Dans la forme de réalisation présentée, les prolongements semi-tubulaires s'épaississent légèrement vers leur extrémité libre, ce qui permet de compenser les éventuelles variations de dimension des gaines à leur périphérie par le positionnement longitudinal des bagues de coincement. Comme indiqué plus haut la rotation partielle des bagues de coincement après translation permet de comprimer les bourrelets des prolongements semi-tubulaires qu'elles enserrent en les faisant sortir des cannelures correspondantes qu'elles comportent, tels les bourrelets 1A42, 1B42 hors des cannelures 31A, 31B lors de la rotation de moins d'un demi tour de la bague 3 autour des prolongements semi-tubulaires 1A4 et 1B4.

Un repérage externe non représenté permet si besoin est de connaître le positionnement en rotation des bagues.

La pièce d'obturation 4 est normalement manoeuvrée en fin de raccordement de manière à obturer la fenêtre d'accès 5.

Bien entendu il est possible à titre de variante de réaliser des rainures rectilignes 1A3, 1B3 différentes pas exemple toutes deux à section en V, ou semi-circulaires, d'utiliser un nombre de prolongements semi-tubulaires différent pour les conduits et une pièce d'obturation 4 différente par exemple coulissante.

## Revendications

1. Connecteur, pour au moins une fibre optique, à corps (1) composé de deux parties complémentaires (1A, 1B) qui comportent chacune au moins un prolongement semi-tubulaire (1A4, 1A4') formant un tube fendu (1A4, 1B4; 1A4', 1B4') avec le prolongement semi-tubulaire (1B4, 1B4') correspondant de l'autre partie complémentaire auquel il s'accole, ce tube fendu portant extérieurement une bague de coincement (3) qui le ceinture pour assurer, suivant sa position sur la longueur du tube fendu, le coincement par ces prolongements d'au moins une fibre optique (2) introduite dans le tube fendu, ledit connecteur étant caractérisé en ce que les prolongements s'épaississent légèrement vers l'une des deux extrémités du tube pour permettre un coincement de fibre par rapprochement mutuel des prolongements du tube par la bague coulissée dans le direction d'épaississement et en ce qu'au moins un des prolongements d'un tube fendu et la bague de coincement, qui ceinture ce tube, comportent respectivement et complémentairement, pour le verrouillage en position de cette bague sur ce tube fendu et corollairement d'une fibre optique dans ledit tube, l'un au moins un bourrelet longitudinal (1A42), l'autre au moins une cannelure longitudinale (31A) où coulisse ce bourrelet, lors d'une translation de la bague sur le tube fendu et d'où s'échappe ledit bourrelet, lors d'une rotation de la bague autour du tube à l'occasion de laquelle ce bourrelet se presse à l'intérieur de la bague qu'il immobilise par rapport au tube, en conséquence.

2. Connecteur pour fibres optiques, selon la revendication 1, caractérisé en ce qu'il comporte au moins deux tubes fendus qui sont alignés et qui sont composés chacun de deux prolongements semi-tubulaires (1A4, 1B4 et 1A4', 1B4') s'ouvrant de part et d'autre d'une portion centrale composée par accolement de deux zones centrales (1A1, 1B1) des parties complémentaires (1A, 1B), chaque tube portant une bague de coincement (3, 3′) de manière à permettre le raccordement en bout, en portion centrale, d'au moins deux fibres introduites chacune par une extrémité d'un des tubes alignés.

3. Connecteur pour fibres optiques selon la revendication 2, caractérisé en ce qu'il comporte au moins un conduit interne, dit de raccordement (1A3, 1B3) pour les fibres, qui est formé par des rainures complémentaires ménagées dans les parties complémentaires (1A, 1B) au long des prolongements semi-tubulaires (1A4, 1B4, 1A4', 1B4') des tubes alignés et au travers des zones centrales (1A1, 1B1).

4. Connecteur pour fibres optiques selon la revendication 3, caractérisé en ce que les parties complémentaires (1A, 1B) sont complémentairement évidées transversalement aux rainures (1A3, 1B3) de conduit de raccordement dans leurs zones centrales respectives (1A1 ou 1B1), le second conduit, formé par les évidements transversaux (1A7, 1B7), débouchant à l'extérieur du connecteur formé par les parties complémentaires accolées et constituant une fenêtre d'accès (5) au conduit de raccordement dans sa portion centrale où se joignent les âmes de deux fibres à raccorder.

5. Connecteur pour fibres optiques selon la revendication 2, caractérisé en ce qu'il comporte une pièce d'obturation (4) venant s'agrafer autour des pièces complémentaires (1A, 1B) accolées, et apte à se déplacer sur ces pièces entre deux positions limites de manière à alternativement dégager ou obturer la fenêtre d'accès (5) au niveau de laquelle ladite pièce d'obturation est placée.

**6.** Connecteur pour fibres optiques selon la revendication 5, caractérisé en ce que la pièce d'obturation est constituée par un anneau longitudinalement fendu qui est apte à tourner au moins partiellement autour du connecteur formé par les pièces complémentaires (1A, 1B) accolées autour desquelles il vient élastiquement s'enfourcher dans la zone où se trouve la fenêtre, qu'alternativement il dégage ou obture suivant sa position, tout en participant au maintien des pièces complémentaires en position accolée.

**7.** Connecteur pour fibres optiques selon l'une des revendications 1 ou 2, caractérisé en ce qu'il comporte deux parties complémentaires (1A, 1B) simultanément moulées côte à côte en une pièce unique où ces deux parties complémentaires sont reliées par au moins une liaison latérale souple (1C) permettant par pliage la mise en position accolée.

**8.** Connecteur pour fibres optiques selon l'une des revendications 1 ou 2, caractérisé en ce que les deux zones centrales (1A1, 1B1), porteuses des organes de positionnement et complémentairement rainurées qui délimitent la portion centrale d'au moins un conduit de raccordement sur respectivement chacune une partie complémentaire sont rectilignes et dotées de rainures (1A3, 1B3) de même longueur, l'une (1A3) rigide et à section en V, l'autre (1B3) à fond légèrement flexible, de manière à assure un positionnement précis et sans écrasement des âmes des fibres (2, 2') à raccorder.

**9.** Connecteur pour fibres optiques selon la revendication 8, caractérisé en ce qu'il comporte au moins une rainure (1B3) à fond légèrement flexible, dont le fond est longitudinalement et centralement fendu, l'épaisseur de la paroi de la partie complémentaire (1A) qui la comporte se réduisant progressivement au moins vers les bords longitudinaux de la fente ainsi obtenue.

**Claims**

**1.** A connector for at least one optical fiber, with a body (1) composed of two complementary portions (1A, 1B), each including at least one semi-tubular extension (1A4, 1A4'), forming a split tube (1A4, 1B4; 1A4', 1B4') with the corresponding semi-tubular extension (1B4, 1B4') of the other complementary portion with which it is assembled, said split tube carrying an external locking ring (3) which girdles it in order to ensure, according to its position on the length of the split tube, by these extensions the locking of at least one optical fiber (2) inserted into the split tube, characterized in that the extensions become slightly thicker towards one of the two ends of the tube in order to permit a fiber locking by mutual approach of the tube extensions by the ring sliding in the direction of the thickening, and in that at least one of the extensions of a split tube and the locking ring, which girdles this tube, comprises respectively and in a complementary way for the purpose of locking this ring in position on this split tube and of locking additionally an optical fiber in said tube, firstly at least one longitudinal thickening (1A42), and secondly at least one longitudinal groove (31A) where this thickening slides during a translation of the ring on the split tube, and from where this thickening escapes during a rotation of the ring about the tube at which occasion this thickening presses itself into the ring which it consequently immobilizes with respect to the tube.

**2.** A connector for optical fibers according to claim 1, characterized in that it includes at least two split tubes which are aligned and which are each constituted by two semi-tubular extensions (1A4, 1B4 and 1A4', 1B4') opening out from either side of a central portion which is constituted by pressing together two central zones (1A1, 1B1) of the complementary portions (1A, 1B), each tube carrying a locking ring (3, 3') so as to enable at least two fibers to be interconnected end-to-end in the central portion after having been inserted through respective ends of the aligned tubes.

**3.** A connector for optical fibers according to claim 2, characterized in that it includes at least one internal duct (1A3, 1B3) for connecting the fibers, which is constituted by complementary grooves provided in said complementary portions (1A, 1B) along the semi-tubular extensions (1A4, 1B4, 1A4', 1B4') of the aligned tubes and across the central zone (1A1, 1B1).

**4.** A connector for optical fibers according to claim 3, characterized in that the complementary portions (1A, 1B) have complementary recesses extending transversely to the connection duct grooves (1A3, 1B3) in their respective central zones (1A1 or 1B1), with the second duct formed by the transverse recesses (1A7, 1B7) opening to the outside of the connector formed by the assembled complementary portions, and constituting an access window (5) to the middle of the connection duct where the two cores of the fibers to be connected meet.

5. A connector for optical fibers according to claim 2, characterized in that it includes a closure member (4) for fastening around the assembled complementary portions (1A, 1B) and suitable for moving over these portions between two limit positions in such a manner as to open or to close the access window (5) in the vicinity of which said closure member is placed.

6. A connector for optical fibers according to claim 5, characterized in that the closure member is constituted by a lngitudinally split ring which is suitable for rotating through at least a portion of turn about the connector formed by the assembled complementary portions (1A, 1B) around which it is resiliently snap-fitted in the zone including the window, such that it alternatingly opens or closes the window depending on its position, while simultaneously participating in maintaining the complementary portions in the assembled position.

7. A connector for optical fibers according to one of claims 1 or 2, characterized in that it includes two complementary portions (1A, 1B) which are simultaneously molded side-by-side as a single piece with the two complementary portions being interconnected by at least one flexible side connection (1C) allowing by folding the portions to be assembled.

8. A connector for optical fibers according to one of claims 1 or 2, characterized in that the two central zones (1A1, 1B1) bearing the positioning members and grooved in a complementary manner and which delimit the central portion of at least one connection duct on respective ones of the complementary portions, are rectilinear and are provided with grooves (1A3, 1B3) of the same length, one (1A3) being rigid and V-shaped in section, and the other (1B3) having a slightly flexible bottom so as to provide accurate positioning without crushing of the cores of the fibers (2, 2') to be connected.

9. A connector for optical fibers according to claim 8, characterized in that it includes at least one groove (1B3) having a slightly flexible bottom, which bottom is longitudinally and centrally split, with the thickness of the wall of the complementary portion (1A) which includes said groove tapering progressively at least towards the longitudinal edges of the slot obtained in this way.

**Patentansprüche**

1. Verbinder für mindestens eine Lichtleitfaser, mit einem Körper (1), der aus zwei komplementären Teilen (1A, 1B) besteht, die je mindestens eine halbrohrförmige Verlängerung (1A4, 1A4') aufweisen, welche mit der entsprechenden halbrohrförmigen Verlängerung (1B4, 1B4') des anderen komplementären Teils, an die sich sich anfügt, ein geschlitztes Rohr (1A4, 1B4, 1A4', 1B4') bildet, wobei dieses geschlitzte Rohr außen einen Klemmring (3) aufweist, der es umgürtet, um je nach seiner Längsstellung auf dem geschlitzten Rohr das Einklemmen mindestens einer in das geschlitzte Rohr eingeführten Lichtleitfaser (2) durch diese Verlängerungen zu bewirken, dadurch gekennzeichnet, daß die Verlängerungen sich in Richtung eines der Enden des Rohres leicht verdicken, um das Einklemmen der Faser durch gegenseitiges Annähern der Verlängerungen des Rohrs durch den in Richtung der Verdickung gleitenden Ring zu ermöglichen, und daß mindestens eine der Verlängerungen eines geschlitzten Rohres bzw. der Klemmring, der dieses Rohr umgürtet, zum Blockieren des Rings auf dem Rohr und davon abhängig einer Faser in diesem Rohr mindestens ein Längswulst (1A42) bzw. dazu komplementär mindestens eine Längsrille (31A) aufweisen, in der der Wulst bei einer Verschiebung des Rings auf dem geschlitzten Rohr gleitet und aus der dieser Wulst bei einer Drehung des Rings um das Rohr austritt, so daß der Wulst sich im Inneren des Rings preßt und diesen Ring somit in Bezug auf das Rohr blockiert.

2. Verbinder für Lichtleitfasern nach Anspruch 1, dadurch gekennzeichnet, daß er mindestens zwei geschlitzte Rohre aufweist, die in Flucht liegen und die je aus zwei halbrohrförmigen Verlängerungen (1A4, 1B4 und 1A4', 1B4') bestehen, die sich auf beiden Seiten eines zentralen Abschnitts öffnen, der durch Zusammenfügen zweier zentraler Bereiche (1A1, 1B1) der komplementären Teile (1A, 1B) entsteht, wobei jedes Rohr einen Klemmring (3, 3') aufweist, um im zentralen Bereich, die stirnseitige Verbindung mindestens zweier Fasern zu ermöglichen, die durch ein Ende je eines der fluchtenden Rohre eingeführt sind.

3.  Verbinder für Lichtleitfasern nach Anspruch 2, dadurch gekennzeichnet, daß er mindestens eine inneren Kanal (1A3, 1B3), Faseranschlußkanal genannt, aufweist, der aus komplementären Nuten besteht, die in den komplementären Teilen (1A, 1B) entlang der halbrohrförmigen Verlängerungen (1A4, 1B4, 1A4', 1B4') der fluchtenden Rohre und durch die zentralen Bereiche (1A1, 1B1) gebildet sind.

4.  Verbinder für Lichtleitfasern nach Anspruch 3, dadurch gekennzeichnet, daß die komplementären Teile (1A, 1B) komplementär und quer zu den Nuten (1A3, 1B3) des Anschlußkanals in ihren jeweiligen zentralen Bereichen (1A1 oder 1B1) ausgehöhlt sind, wobei der zweite Kanal, der durch Queraushöhlungen (1A7, 1B7) gebildet wird, nach außerhalb des Verbinders mündet, der aus den zusammengefügten Teilen gebildet wird, und ein Zugangsfenster (5) zum Anschlußkanal in seinem zentralen Bereich bildet, wo die Seelen der beiden zu verbindenden Fasern zusammenkommen.

5.  Verbinder für Lichtleitfasern nach Anspruch 2, dadurch gekennzeichnet, daß er ein Verschlußteil (4) aufweist, das sich um die zusammengefügten komplementären Teile (1A, 1B) klemmt und das sich auf diesen Teilen zwischen zwei Endstellungen bewegen kann, um das Zugangsfenster (5) freizulegen oder zu verschließen, in dessen Höhe dieses Verschlußteil angeordnet ist.

6.  Verbinder für Lichtleitfasern nach Anspruch 5, dadurch gekennzeichnet, daß das Verschlußteil aus einem in Längsrichtung geschlitzten Ring besteht, der mindestens teilweise um den aus den komplementären zusammengefügten Teilen (1A, 1B) bestehenden Verbinder drehen kann, auf die er sich elastisch in dem Bereich aufsetzt, wo sich das Fenster befindet, das er freilegt oder verschließt, je nach seiner Stellung, wobei er gleichzeitig für den Zusammenhalt der komplementären Teile in der zusammengefügten Stellung beiträgt.

7.  Verbinder für Lichtleitfasern nach einem der Ansprüche 1 oder 2, dadurch gekennzeichnet, daß er zwei komplementäre Teile (1A, 1B) aufweist, die gleichzeitig nebeneinander aus einem einzigen Stück gegossen werden, wobei diese beiden komplementären Teile durch mindestens eine biegsame Seitenverbindung (1C) miteinander verbunden sind und durch Knicken die Anordnung zusammengefügt werden könnnen.

8.  Verbinder für Lichtleitfasern nach einem der Ansprüche 1 oder 2, dadurch gekennzeichnet, daß die beiden zentralen Bereiche (1A1, 1B1), die die Positionierorgane tragen und komplementär gerillt sind sowie den zentralen Abschnitt mindestens eines Anshclußkanals auf je einem komplementären Teil begrenzen, geradlinig und mit Nuten (1A3, 1B3) gleicher Länge versehen sind, von denen die eine starr (1A3) und von V-Querschnitt ist und die andere (1B3) mit leicht biegsamem Boden versehen ist, um eine präzise Positionierung ohne Zerquetschen der Seelen der zu verbindenden Fasern (2, 2') zu ermöglichen.

9.  Verbinder für Lichtleitfasern nach Anspruch 8, dadurch gekennzeichnet, daß er mindestens eine Nut (1B3) mit leicht biegsamem Boden aufweist, deren Boden in Längsrichtung und zentral geschlitzt ist, wobei die Dicke der Wand des komplementären Teils (1A), in dem sie sich befindet, sich zumindest in Richtung der Längsränder des so erhaltenen Schlitzes progressiv verringert.

FIG.2

FIG.1

FIG.3

FIG.4

EP 0 232 754 B1

# FIG.5

# FIG.6

# FIG.7

EP 0 232 754 B1